# EUROPÄISCHE PATENTSCHRIFT

(11) **EP 1 834 729 B1**
(45) Veröffentlichungstag und Bekanntmachung des Hinweises auf die Patenterteilung: **25.02.2009**
(21) Anmeldenummer: 07405080.8
(22) Anmeldetag: 09.03.2007
(51) Int. Cl.: B23Q 7/04, B24B 5/18, B24B 5/35

(54) **Hoch-Geschwindigkeits-Lader**
High speed charger
Surcompresseur grande vitesse

(30) Priorität: 14.03.2006 CH 403062006
(43) Veröffentlichungstag der Anmeldung: 19.09.2007
(73) Patentinhaber: Wenger Automation & Engineering AG, 8409 Winterthur (CH)
(72) Erfinder: Brunner, Hans, jun., 8488 Turbenthal (CH)
(74) Vertreter: Roshardt, Werner Alfred

(56) Entgegenhaltungen:
- DE-A1- 3 429 616
- US-A- 4 043 767
- US-A- 4 616 448
- US-A- 5 027 563

## Beschreibung

### Technisches Gebiet

Die Erfindung bezieht sich auf ein Verfahren zum automatischen Beladen und Entladen einer Aussenrund-Centerless-Schleifmaschine mit Werkstücken, welche Schleifmaschine zum Aussenrundschleifen vorgesehen ist und eine Beladungs-/Entladungseinrichtung und wenigstens eine Bearbeitungseinheit mit je einer Schleifscheibe, einer Regelscheibe und einem Auflagelineal für die Werkstücke umfasst. Weiter betrifft die Erfindung eine Centerless-Schleifmaschine mit Beladungs-/Entladungseinrichtung zur Durchführung des Verfahrens.

### Stand der Technik

Centerless-Schleifen, auch bekannt als spitzenloses Schleifen, gehört zu den Aussenrundschleifverfahren. Im Gegensatz zum gewöhnlichen Rundschleifverfahren, in welchem ein Werkstück zwischen zwei Spitzen drehbar gehaltert ist, wird das Werkstück beim Centerless-Schleifen nicht fixiert und benötigt daher auch keine Ansenkungen oder Halterungen an den stirnseitigen Enden. Stattdessen liegt das Werkstück in der Centerless-Schleifmaschine mit seiner Manteloberfläche auf einem etwa senkrechten Auflagelineal zwischen einer Schleifscheibe und einer Regelscheibe, wobei das Auflagelineal oft aus Hartmetall besteht. Das Werkstück rotiert dabei während der Bearbeitung zwischen der schnell drehenden Schleifscheibe und der langsamer gegenläufig rotierenden, kleineren Regelscheibe.

Das Auflagelineal, auch Auflageschiene oder Führungslineal genannt, ist gewöhnlich so positionierbar, dass das Zentrum der Werkstückachse über einer gedachten Verbindungslinie zwischen den Mittelpunkten von Schleifscheibe und Regelscheibe liegt, was kurz als übermittig bezeichnet wird. Es sind aber auch Schleifmaschinen bekannt, welche die Werkstücke untermittig oder mittig bearbeiten. Dabei liegt das Werkstück entsprechend unterhalb (untermittig) bzw. auf (mittig) der gedachten Verbindungslinie zwischen den Mittelpunkten der Schleifscheibe und der Regelscheibe. Das Auflagelineal weist zudem in Richtung der Regelscheibe vorzugsweise eine Schräge nach unten auf, um das Werkstück zwischen Auflagelineal und Regelscheibe zu fixieren. Die Regelscheibe besteht üblicherweise aus einem weichen Material, z. B. einer Gummimischung, die harte Körner enthalten kann, um den Kraftschluss zwischen Werkstück und Regelscheibe zu gewährleisten.

Man unterscheidet grundsätzlich zwei Arten des Centerless-Schleifens:
- *Einstechrundschleifen:* Das Werkstück kann über den Verlauf unterschiedliche Dicken aufweisen und es wird entweder ein Teil des Werkstücks oder bei formgebenden und entsprechend angepassten Schleifscheiben das ganze Werkstück geschliffen. Abhängig von der Werkstück-Geometrie können unter Umständen auch mehrere Werkstücke gleichzeitig von der Centerless-Schleifmaschine bearbeitet werden.
- *Durchlaufrundschleifen:* Zylindrische Werkstücke können mit diesem Verfahren im Durchlauf bearbeitet werden. Das Werkstück kann länger sein als die Breite der Schleifscheibe und wird doch auf der gesamten Länge geschliffen. Auch sehr kleine Werkstücke können im Durchlauf bearbeitet werden. Es befinden sich dann oft mehrere Werkstücke gleichzeitig in der Centerless-Schleifmaschine und es können grosse Produktionsstückzahlen erzielt werden.

Im Rahmen der vorliegenden Erfindung ist primär das Einstechrundschleifen von Interesse.

Wichtige Vorteile des Centerless-Schleifens gegenüber gewöhnlichen Rundschleifverfahren ergeben sich vor allem deswegen, weil durch die linienförmige Abstützung eines Werkstücks geringe Biege- und/oder Torsionsbeanspruchungen auftreten und deshalb auch biegeweiche und spröde Werkstücke gut verarbeitbar sind, was einer hohen Zerspanungsleistung entspricht. Des Weiteren erfordern die zu bearbeitenden Werkstücke keine Vorbereitung zum Spannen oder zur Übertragung der Drehbewegung, weshalb selten Zentrierfehler oder Fehler infolge eines Umspannens auftreten.

Ein breites und wichtiges Anwendungsfeld für Centerless-Schleifmaschinen ist das Schleifen von Bauteilen/Werkstücken für die Grossserienfertigung, z. B. Bolzen, Wellen, Wälzlagerelemente, Lagersitze, Ventilstössel, Düsennadeln, Rotorachsen und Kugelzapfen. Das Centerless-Schleifen wird aber auch in einer Vielzahl von Sonderfällen genutzt, zum Beispiel zur Bearbeitung von Stangen, Rohren, Schreibwalzen mit Gummiauflage, Zündkerzenisolatoren und Billardkugeln.

Das Centerless-Schleifen hat wegen der genannten Vorteile und der vielen Anwendungsmöglichkeiten eine grosse Bedeutung erlangt, weshalb weitere Verbesserungen auf diesem Gebiet von grösstem Interesse sind.

Ein grosses Problem bei der Bearbeitung von Werkstücken mit Centerless-Schleifmaschinen besteht jedoch darin, dass relativ kleine Werkstücke, wie zum Beispiel Düsennadeln mit einem Durchmesser von 4 mm, zwischen der Schleif- und der Regelscheibe, welche ein Vielfaches des Werkstückdurchmessers aufweisen, von Greifsystemen oft nur mit erheblichen Schwierigkeiten Be-/Entladen werden können. Typischerweise werden hierfür relativ kostenintensive Portallader beziehungsweise Portalgreifsysteme genutzt.

Weil ein Werkstück bei der Bearbeitung mit Centerless-Schleifmaschinen nicht zwischen Spitzen an den Werkstückenden mittig gehalten wird, besteht ein weiteres Problem darin, dass ein bearbeitetes Werkstück am Ende einer Schleifoperation infolge des abnehmenden Schleifdurchmessers eine veränderte Lage aufweist. Greifsysteme können das Werkstück nach der Schleifbearbeitung sodann wegen der veränderten Lage oft nur mit Mühe ergreifen, was ein Fehlhandling mit entsprechenden Maschinenstillstandszeiten und/oder Nachjustierungen der Greifsysteme zur Folge haben kann. Ausserdem sind umso aufwendigere und teurere Handlingsysteme/Portallader nötig, je grösser das Verhältnis zwischen Schleif- beziehungsweise Regelscheibendurchmesser und Werkstückdurchmesser ist. Dieser Umstand liegt darin begründet, dass insbesondere das Herausgreifen und Transportieren des bearbeiteten Werkstücks, welches infolge der hohen Bearbeitungsgenauigkeit sehr empfindlich ist, nur unter Nutzung von aufwendiger Technik gelingt.

Bei relativ kleinen Werkstücken liegen die Durchlaufzeiten für eine Schleifoperation inklusive Be-/Entladen typischerweise bei etwa 5-10 Sek., wovon das Be-/Entladen selbst etwa 2,5-4 Sek. beansprucht. Eine typische Schleifoperation, zum Beispiel Grobschleifen auf einen gewünschten Durchmesser, benötigt etwa 6 Sek. plus etwa 3 Sek. für das Be-/Entladen. Das heisst, das Be-/Entladen als reine Werkstückwechselzeit nimmt etwa 50 % der Bearbeitungszeit einer typischen Centerless-Schleifoperation in Anspruch. Dies stellt ein weiteres Problem dar, der Anteil der Werkstückwechselzeit ist im Verhältnis zur produktiven Schleifoperation zu gross. Je kürzer eine Schleifoperation dauert, desto grösser ist der relative Anteil der reinen Werkstückwechselzeit.

Weiter summieren sich bei Werkstücken, welche mehrere Schleifoperationen benötigen, die Werkstückwechselzeiten mit der Anzahl der Schleifoperationen, zum Beispiel, Operation 1: Durchmesser schleifen; Operation 2: Sitzkegel schleifen. Weil das Centerless-Schleifen ein breites Anwendungsfeld in der Grossserienfertigung hat, haben die Werkstückwechselzeiten einen substantiellen Anteil an den Werkstückherstellungskosten.

Ein Verfahren sowie eine Vorrichtung nach den Oberbegriffen von Ansprüchen 1 und 13 wird in Dokument US 4 043 767 gezeigt.

### Darstellung der Erfindung

Der Erfindung liegt deshalb die Aufgabe zugrunde, die Be-/Entladezeiten von Werkstücken, d. h. die reinen Werkstückwechselzeiten, in Centerless-Schleifmaschinen substantiell zu verkürzen und gleichzeitig die Betriebssicherheit wesentlich zu erhöhen.

Die Aufgabe wird in Bezug auf das Verfahren erfindungsgemäss dadurch gelöst, dass die bearbeiteten Werkstücke mittels eines temporären, gerichteten Fluidstroms vom Auflagelineal abgehoben und abtransportiert werden. Spezielle und weiterbildende Ausführungsformen des Verfahrens sind Gegenstand von abhängigen Ansprüchen.

Grundsätzlich werden beim erfindungsgemässen Verfahren drei Be-/Entladezyklen unterschieden:
- Vollfahr-Zyklus: Es wird wenigstens ein noch unbearbeitetes Werkstück in die unbestückte Centerless-Schleifmaschine eingeschleust. Dieser erste Zyklus wird in der Regel zu Beginn einer Serienfertigung einmal gefahren.
- Normalfahr-Zyklus: Der zweite Zyklus schleust wenigstens ein bearbeitetes Werkstück aus der Centerless-Schleifmaschine aus und schleust wenigstens ein weiteres, noch unbearbeitetes Werkstück in die Centerless-Schleifmaschine ein. Dieser mittlere Zyklus wird während einer Serienfertigung unter Umständen über viele Stunden oder Tage gefahren.
- Leerfahr-Zyklus: Der dritte Zyklus schleust ein bearbeitetes Werkstück, das letzte einer Serie, aus der Centerless-Schleifmaschine aus, ohne gleichzeitig ein weiteres, unbearbeitetes Werkstück einzuschleusen. Dieser letzte Zyklus wird in der Regel am Ende einer Serienfertigung einmal gefahren.

Die drei beschriebenen Zyklen werden üblicherweise über Softwareprogramme gesteuert und mit den Schleifoperationen einer Centerless-Schleifmaschine getaktet beziehungsweise synchronisiert.

Die Schleifscheibe rotiert in der Regel mit grosser Geschwindigkeit. Damit möglichst wenig Zeit beim Be- und Entladen verloren geht, wird der Fluidstrom bei laufender Schleifscheibe eingeschaltet. Da die Schleiffläche, bzw. die Mantelfläche der Schleifscheibe, sich im Bereich des Auflagelineals von oben nach unten bewegt und der Fluidstrom von unten nach oben gerichtet ist, ist der Fluidstrom gegenläufig zur Umfangsgeschwindigkeit gerichtet.

Es ist aber auch denkbar, dass die Geschwindigkeit der Schleifscheibe für das Be- und Entladen nicht konstant hoch ist, sondern vorübergehend reduziert wird.

Beim Abheben des Werkstücks soll oberhalb des Auflagelineals ein kanalförmiger Bereich definiert sein, in welchem der Fluidstrom geführt werden kann. Der kanalförmige Bereich kann im einfachsten Fall nur schon durch den engen Bereich zwischen Schleifscheibe und Regelscheibe gebildet werden. Der Fluidstrom hat vorzugsweise ein grosses Volumen und wirkt nicht nur punktuell auf das Werkstück. Er spült das Werkstück quasi nach oben vom Auflagelineal weg.

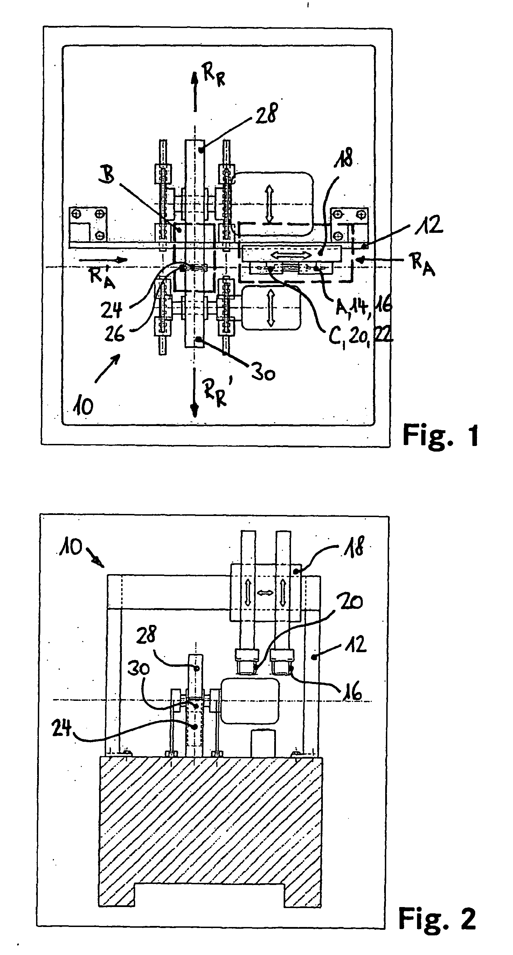

In einer vorteilhaften Variante des Verfahrens werden die bezüglich der Schleif- und Regelscheibe meist übermittig bearbeiteten Werkstücke mit dem vorzugsweise steuer- und/oder regelbaren Fluidstrom zu einem Anschlag gehoben und mittels eines Längsschiebers in Axialrichtung der Schleifscheibe (R_{A} oder R_{A}' in Fig. 1) oder mittels eines Dreh- oder Querschiebers in Radialrichtung der Schleifscheibe (R_{R} oder R_{R}' in Fig. 1) ausgestossen, wobei gleichzeitig das unbearbeitete Werkstück über das Auflagelineal geschoben wird. Über veränderliche Parameter, wie zum Beispiel Fluiddruck, Fluidgeschwindigkeit, Anzahl Austrittsdüsen, Richtung und Grösse eines Fluidstroms, lassen sich die werkstückspezifisch idealen Parameter, abhängig von Grösse, Ausformung, Position, Gewicht des Werkstücks ermitteln und einstellen. Grundsätzlich hat ein Fluidstrom ausserdem über entsprechend dimensionierte Öffnungen die Möglichkeit, in Richtung des Fluidstroms zu entweichen. Das erfindungsgemässe Verfahren eignet sich genauso für Schleifmaschinen in welchen die Werkstücke untermittig oder mittig bearbeitet werden.

In einer weiteren, vorteilhaften Variante des Verfahrens wird unmittelbar vor dem Einschalten des Fluidstroms ein peripherer Schutz, bzw. Schutzelemente, wenigstens entlang der Schleifscheibe im Arbeitstakt nach unten gestossen und wieder angehoben. Vorzugsweise wird hierfür ein Schutzblech beziehungsweise eine Abdeckung aus Metall und/oder Kunststoff genutzt, welches die Schleifscheibe und/oder die Regelscheibe abdeckt und ein Berühren der Werkstücke, insbesondere mit der Schleifscheibe, bei entsprechender Ausbildung der Abdeckung auch mit der Regelscheibe, während des Be-/Entladens der Centerless-Schleifmaschine verhindert.

Zudem kann durch geeignet ausgebildete Schutzelemente, z. B. eine kanalartige Vorrichtung mit Begrenzungen auf der Seite der Schleif- und/oder auf der Seite der Regelscheibe, der Fluidstrom kanalisiert werden. Dabei wird insbesondere verhindert, dass das Fluid beim Anheben in Richtung der Schleif- und/oder der Regelscheibe seitlich entweichen kann. Dies hat den wesentlichen Vorteil, dass nahezu der gesamte Fluidstrom zum Anheben des Werkstücks beiträgt.

Vor allem die sehr schnell rotierende Schleifscheibe weist an ihrer Oberfläche immer eine Schicht aus bewegter bzw. mitrotierender Luft auf, welche im Bereich des Auflagelineals zu einem starken Luftstrom führt, welcher dem Fluidstrom entgegengerichtet ist. Die dadurch auftretenden Verwirbelungen des Fluidstroms können durch die Schutzelemente, bzw. den peripheren Schutz, stark reduziert werden.

Insgesamt wird durch den peripheren Schutz, bzw. die Schutzelemente also ein schnelleres und stärker gerichtetes Anheben des Werkstücks erreicht, wodurch der Werkstückwechsel weiter beschleunigt wird.

Zweckmässig wird die Schleifscheibe und/oder die Regelscheibe vor dem Einschalten des Fluidstroms in radialer Richtung zurückgefahren, vorzugsweise etwa um eine Distanz, welche maximal gleich dem Radius des Werkstücks ist, z. B. 1 mm. Damit wird ein Verklemmen verhindert und genügend Platz geschaffen, um das Werkstück durch den gerichteten Fluidstrom und allfälligen peripheren Schutzelementen abzuheben. Gleichzeitig wird damit verhindert, dass das Werkstück zwischen Auflagelineal und rotierenden Scheiben nach unten fällt.

In einer vorteilhaften Ausführungsvariante des Verfahrens werden die unbearbeiteten Werkstücke aus einem Ladekopf entnommen und mit einem temporären, gerichteten Fluidstrom, welcher vorzugsweise steuer- und/oder regelbar ist, auf das Auflagelineal abgesenkt. Zweckmässig wird hierbei dasselbe Fluid benutzt, welches ein bearbeitetes Werkstück abhebt, allerdings ist die Richtung des Fluidstroms, vorzugsweise durch ein Umschaltventil gesteuert, nun etwa entgegengerichtet.

In einer weiteren, besonders vorteilhaften Variante des Verfahrens sind temporäre, gerichtete Fluidströme gleichzeitig in unterschiedlicher Stärke gegeneinander gerichtet und vorzugsweise steuer- und/oder regelbar, damit eine resultierende Transportrichtung für die Werkstücke erzeugt werden kann. Damit lassen sich sensible Werkstücke/Bauteile relativ sanft anheben und/oder absenken und Beschädigungen vermeiden.

In einer anderen bevorzugten Variante des Verfahrens wird kurz vor dem Abheben des Werkstücks vom Auflagelineal eine Führungsvorrichtung, wie z. B. ein Stössel, insbesondere mit einer auf das Werkstück angepassten Kontaktfläche, zur automatischen Zentrierung und/oder seitlichen Fixierung des Werkstücks von oben auf oder nahe zum Werkstück abgesenkt. Die Kontaktflächen können beispielsweise durch Nuten am unteren Ende des Stössels gebildet werden, wobei insbesondere Rund-, Dreieck- oder Vierecknuten geeignet sind. Es ist aber auch möglich, am unteren Ende des Stössels Vorstände oder dergleichen anzubringen, welche die Zentrier- oder Fixierfunktionen übernehmen. Das eigentliche Abheben erfolgt wie vorstehend beschrieben durch gerichtete Fluidströme. Während einer Bewegung der Führungsvorrichtung nach oben, bzw. aus dem Schleifbereich heraus, drücken die Fluidströme dabei das Werkstück von unten an die Führungsvorrichtung. Werkstücke, welche aufgrund ihrer Form, Grösse oder Massenverteilung im Fluidstrom nebst der erwünschten Translation beim Abheben unkontrollierte Rotationsbewegungen oder Überschläge durchführen würden, können so durch die Führungsvorrichtung in einer drehsicheren Lage gehalten und kontrolliert aus dem Schleifbereich entfernt werden. Genauso lässt sich die Führungsvorrichtung natürlich auch beim Absenken der Werkstücke einsetzen. In beiden Fällen ist jeweils sicherzustellen, dass die durch den Fluiddruck erzeugte Kraft auf das Werkstück mindestens gleich gross und bevorzugt grösser ist als die Gewichtskraft des Werkstücks plus andere über die Führungsvorrichtung nach unten gerichtete Kräfte.

Zweckmässig wird oberhalb der Führungsvorrichtung, z. B. im Ladekopf, eine Feder angebracht, welche die Führungsvorrichtung nach unten in Richtung des bearbeiteten Werkstücks drückt. Beim Abheben des Werkstücks wird die Feder dann bei genügend grossem Druck, welcher durch die gesteuerten Fluidströme auf das Werkstück und/oder die Führungsvorrichtung erzeugt wird, zusammengedrückt, womit das Abheben des Werkstücks erfolgt. Beim Absenken eines unbearbeiteten Werkstücks wird der Fluiddruck soweit reduziert, dass sich die Feder wieder ausdehnen kann und die Führungsvorrichtung mit dem Werkstück aufgrund der Federkraft nach unten schiebt.

Bevorzugt kann die Führungsvorrichtung zusätzlich zur oder anstelle der Feder auch über eine mechanisch starre Vorrichtung mit einem Antrieb verbunden werden, welcher mit dem Arbeitstakt der Centerless-Schleifmaschine synchronisiert arbeitet.

Vorteilhaft wird als Fluid Luft und/oder ein Kühlschmiermittel eingesetzt, welche/s üblicherweise bereits in der Centerless-Schleifmaschine, beispielsweise zu Kühlzwecken während des Schleifens, eingesetzt werden.

Nach dem Bearbeiten eines Werkstücks wird zweckmässig eine Wechseleinheit eingefahren und/oder eingeschwenkt und nach dem Absenken eines zu bearbeitenden Werkstücks wieder ausgefahren und/oder ausgeschwenkt, wobei eine Werkstückwechselzeit von vorzugsweise 0,5-1,5 Sek., insbesondere etwa 1 Sek., eingehalten wird.

In einer weiterführenden Variante werden die bearbeiteten Werkstücke mit einer Luftblaseinheit über Schläuche und/oder Rohre nach dem Werkstückwechsel aus dem Ladekopf oder vom Werkstück-Abholbereich an eine Werkstückempfangsstation mit wenigstens einer Dämpfungseinheit geblasen bzw. gespült. Die Dämpfungseinheit dient dabei einem schonenden Abbremsen der in der Empfangsstation ankommenden Werkstücke und besteht vorteilhaft aus einer Gummimischung.

In einer weiteren Variante können auch unbearbeitete Werkstücke mittels einer Luftblaseinheit über Schläuche und/oder Rohre direkt und ohne Zwischenablage von einem Werkstück-Bereitstellungsbereich oder einem Magazin in den Ladekopf geblasen werden.

In Bezug auf die Centerless-Schleifmaschine zur Durchführung des Verfahrens wird die Aufgabe erfindungsgemäss dadurch gelöst, dass das Auflagelineal Fluidkanäle mit wenigstens einer Austrittsöffnung an und/oder in einer Auflagefläche aufweist. Spezielle und weiterbildende Ausführungsformen der Centerless-Schleifmaschine sind Gegenstand von abhängigen Patentansprüchen.

Das erfindungsgemässe Verfahren kann von vier Be-/Entlade-Kombinationsmöglichkeiten begleitet werden, welche primär in Abhängigkeit von den baulich-geometrischen Gegebenheiten einer Centerless-Schleifmaschine sowie der Grösse, der Bauform, dem Gewicht und der gleichzeitig abzuarbeitenden Stückzahl eines Werkstücks bestimmt und nachfolgend tabellarisch zusammengefasst ist:

| | Unbearbeitetes Werkstück einschleusen mittels... | Bearbeitetes Werkstück ausschleusen mittels... |
|---|---|---|
| 1. | Luftblaseinheit | Luftblaseinheit |
| 2. | Ladekopf | Luftblaseinheit |
| 3. | Luftblaseinheit | Ladekopf |
| 4. | Ladekopf | Ladekopf |

In besonders vorteilhaften Ausführungsvarianten der Centerless-Schleifmaschine ist wenigstens ein Fluidkanal zwischen Auflagelineal und Schleifscheibe und/oder zwischen Auflagelineal und Regelscheibe ausgebildet. Das Auflagelineal weist im Auflagebereich der Werkstücke zweckmässig einen Längsanschlag auf, mit welchem ein unbearbeitetes Werkstück zu Beginn einer Schleifoperation mit wenigstens einem nach unten beziehungsweise in die Richtung des Auflagelineals gerichteten Fluidstroms in die Bearbeitungsposition transportiert wird. Dort wird das zu bearbeitende Werkstück durch Anschlagen an einen Längsanschlag an wenigstens einem Ende des Auflagelineals in eine definierte Position gebracht.

In anderen Ausführungsvarianten, in welchen eine gewünschte Geometrie der zu bearbeitenden Werkstücke durch entsprechend vorgeformte Schleif- und/oder Regelscheiben erzeugt wird, wird üblicherweise auf den Längsanschlag verzichtet.

Die erfindungsgemässe Centerless-Schleifmaschine weist bevorzugt einen Ladekopf für die Werkstücke auf, welcher ein-/ausschwenkbar, ein-/ausfahrbar und/oder kipp-/drehbar ausgebildet und vorzugsweise mittels einer Kurvenscheibe gesteuert ist. Der Quer-, Längs- oder Drehschieber im Ladekopf ist axial derart verschiebbar, dass wenigstens ein im Ladekopf vorhandener Ladeplatz eine das Werkstück sichernde und/oder eine das Werkstück entsichernde Position erreicht.

Die Wechseleinheit für die Werkstücke beinhaltet vorteilhaft einen Quer-, Längs- oder Drehschieber für den Werkstückwechsel, mit welchem ein zu bearbeitendes Werkstück in die Maschinen-Beladeposition, welche auch als Entladestelle dient, gebracht wird. Von dort wird ein unbearbeitetes Werkstück mit dem in Richtung des Auflagelineals gerichteten Fluidstroms in die Bearbeitungsposition gebracht.

In einer vorteilhaften Variante weist die erfindungsgemässe Centerless-Schleifmaschine absenk- und abhebbare Schutzelemente, bzw. eine Schutzhülle für die Mantelfläche einer Schleifscheibe und/oder einer Regelscheibe auf, insbesondere ein Metallschutzblech oder einen Kunststoffschutz.

In einer weiteren, vorteilhaften Variante der erfindungsgemässen Centerless-Schleifmaschine sind Werkstück berührende Maschinenteile aus hochfestem Material gefertigt, vorzugsweise aus hochverschleissfestem Kunststoff und/oder Hartmetall.

In einer weiteren, vorteilhaften Variante sind wenigstens zwei der Elemente Schleifscheibe, Regelscheibe und Auflagelineal verschiebbar, nämlich die Schleif- und die Regelscheibe jeweils einstellbar in radialer Richtung und/oder das Auflagelineal in seiner Längs- und/oder Querrichtung.

Die wesentlichen Vorteile des erfindungsgemässen Verfahrens beziehungsweise der erfindungsgemässen Centerless-Schleifmaschine gegenüber üblichen Maschinen mit Be-/Entladungslösungen mit Portalladern/Greifsystemen lassen sich wie folgt zusammenfassen:
- die Werkstück-Be-/Entladezeiten beziehungsweise Werkstückwechselzeiten sind wesentlich kürzer und ergeben eine entsprechend höhere Produktivität,
- die Betriebssicherheit ist wesentlich erhöht,
- Werkstückbeschädigungen durch Portallader/Greifsysteme können nicht auftreten und deren heikle/exakte (Nach-)Justierungen/Einstellungen werden vermieden, und
- ein Anheben/Absenken des Werkstücks durch einen temporären, gerichteten Fluidstrom ist schonender als jener mit Greifsystemen beziehungsweise Portalladern.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachfolgend anhand von in Zeichnungen dargestellten Ausführungsbeispielen näher erläutert, welche auch Gegenstand von abhängigen Ansprüchen sind. Es zeigen schematisch:
- Fig. 1: eine Draufsicht auf eine Centerless-Schleifmaschine mit einem Portallader (Stand der Technik),
- Fig. 2: eine Ansicht auf die Centerless-Schleifmaschine gemäss Fig. 1 von vorne,
- Fig. 3: eine Draufsicht auf eine erfindungsgemässe Centerless-Schleifmaschine mit einem High-Speed-Lader, und
- Fig. 4: eine Teilansicht von vorne auf den High-Speed-Lader der erfindungsgemässen Centerless-Schleifmaschine gemäss Fig. 3.
- Fig. 5: eine Detailansicht des Schleifbereichs im Querschnitt.

Grundsätzlich sind in den Figuren gleiche Teile mit gleichen Bezugszeichen versehen.

### Wege zur Ausführung der Erfindung

**Fig. 1** und **2** zeigen eine Draufsicht auf eine schematisch dargestellte Centerless-Schleifmaschine 10 mit einem Portallader 12 nach dem Stand der Technik. Ein zu bearbeitendes Werkstück 14, auch Rohling genannt, wird von einem Werkstück-Bereitstellungsbereich A mittels Greifern 16 entnommen und mit einem Laufwagen 18 in die Axialrichtung R_{A} des Werkstück-Bearbeitungsbereichs B der Centerless-Schleifmaschine 10 gebracht, von wo ein zweites Paar Greifer 20 ein bearbeitetes Werkstück 22 zunächst dem Auflagelineal 24 im Werkstück-Bearbeitungsbereich B entnimmt und so Platz schafft, um das noch unbearbeitete Werkstück 14 auf dem Auflagelineal 24 bereitzulegen. Die Position des unbearbeiteten Werkstücks 14 im Bearbeitungsbereich B wird unter anderem durch einen Längsanschlag 26 definiert. Nun wird das noch in den Greifern 20 befindliche, bearbeitete Werkstück 22 in den Werkstück-Abholbereich C transportiert, wo ein der Übersichtlichkeit wegen nicht eingezeichnetes, unabhängiges Handlingsystem das bearbeitete Werkstück 22 entnimmt und zuvor ein unbearbeitetes Werkstück 14 in den Werkstück-Bereitstellungsbereich A bereit gelegt hat. In anderen, nicht dargestellten Ausführungsvarianten fährt ein Portallader 12 auch direkt aus der Centerless-Schleifmaschine 10 und holt sich von einem Zuführband im Werkstück-Bereitstellungsbereich A ein zu bearbeitendes Werkstück 14 beziehungsweise liefert ein bereits bearbeitetes Werkstück 22 im Werkstück-Abholbereich C ab. Der Werkstück-Bereitstellungsbereich A beziehungsweise der Werkstück-Abholbereich C liegt hierbei in Abhängigkeit von der Grösse der Centerless-Schleifmaschine 10 sowie dem Anforderungsprofil innerhalb und/oder ausserhalb der Centerless-Schleifmaschine 10.

Der Portallader 12 wartet den nun beginnenden Schleifprozess ab. Das Werkstück 14 wird zwischen einer Schleifscheibe 28 und einer Regelscheibe 30, welche in Radialrichtung R_{R}, R_{R}' verschiebbar sind, in einen definierten Zustand geschliffen, zum Beispiel auf einen bestimmten Durchmesser und in eine bestimmte Oberflächenqualität. Nach Beendigung der betreffenden Schleifoperation kann der beschriebene Arbeitszyklus von neuem beginnen.

Aus Fig. 2 werden insbesondere die Freiheitsgrade der Greifer 16, 20 und des Laufwagens 18 sichtbar, welche durch Doppelpfeile angedeutet sind.

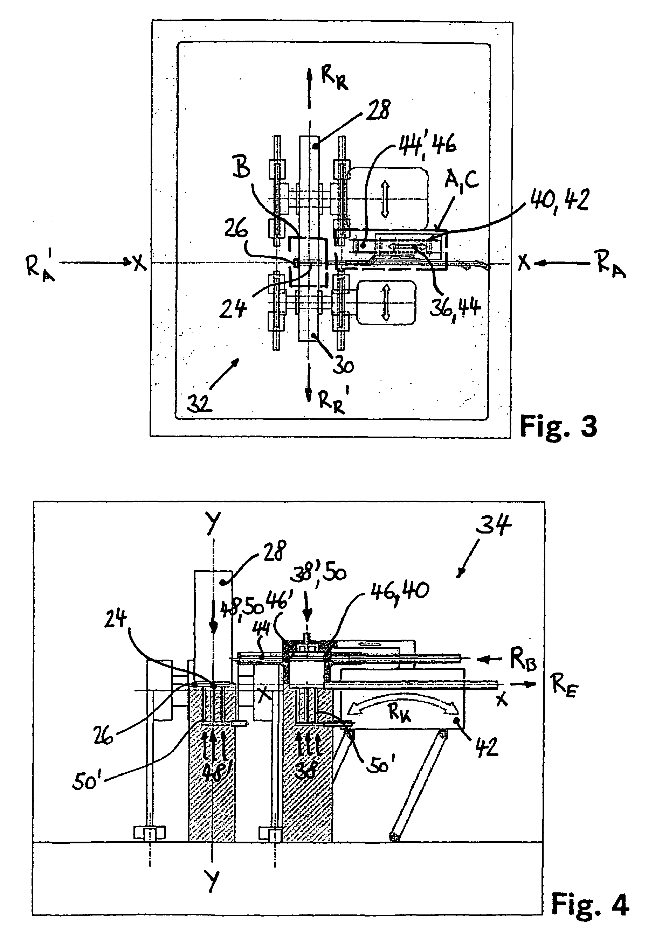

**Fig. 3** und **4** zeigen eine Draufsicht, beziehungsweise eine Teilansicht einer erfindungsgemässen Centerless-Schleifmaschine 32 mit einem High-Speed-Lader 34. Im gezeigten Ausführungsbeispiel liegen der Werkstück-Bereitstellungsbereich A, der gleichzeitig als Werkstück-Abholbereich C dient, mit dem Werkstück-Bearbeitungsbereich B etwa entlang einer Mittellinie X-X, wobei die Bereiche A, C und B schematisch durch gestrichelte Rechtecke eingegrenzt sind.

Der Übersichtlichkeit wegen nicht dargestellt ist eine Beladungseinrichtung, welche zunächst eine Zwischenablage 36 mit einem unbearbeiteten Werkstück 14 füllt und eine Entladungseinrichtung, welche ein bearbeitetes Werkstück 22 aus der Zwischenablage 36 entnimmt und aus dem Bereich der Centerless-Schleifmaschine 32 hinaus leitet. Je nach Anforderungsprofil werden dafür Förderbänder, Greifsysteme und/oder Luftfördersysteme eingesetzt. In weiteren, nicht dargestellten Ausführungen erfolgt das Auffüllen/Entnehmen eines der Zwischenablage 36 vor-/nachgeschalteten Magazins von Hand und/oder in Kombination mit Förderbändern, Greifsystemen und/oder Luftfördersystemen.

Nachdem ein unbearbeitetes Werkstück 14 in der Zwischenablage 36 bereitliegt, wird es durch einen temporären und gerichteten Fluidstrom 38 von der Zwischenablage 36 in den Ladekopf 40 einer vorteilhaft kurvengesteuerten R_{K} Wechseleinheit 42 befördert. Wie erwähnt kann dieser Vorgang auch mit einer Luftblaseinheit direkt und ohne Zwischenablage 36 erfolgen. Der Ladekopf 40 weist in der dargestellten Variante zwei Ladeplätze 44 und 44' auf. Der Ladeplatz 44 wird für den Transport eines unbearbeiteten Werkstücks 14 und der Ladeplatz 44' für den Transport eines bearbeiteten Werkstücks 22 genutzt. In weiteren, nicht dargestellten Ausführungsvarianten stehen Ladeplätze für mehr als zwei Werkstücke 14, 22 zur Verfügung.

Ein Querschieber 46 des Ladekopfs 40 wird zunächst um etwa die Länge eines unbearbeiteten Werkstücks 14 in Axialrichtung R_{A} gefahren, wodurch das Werkstück 14 gegen die Schwerkraft und später auftretende Beschleunigungs-/Verzögerungskräfte gesichert wird. Danach wird der Ladekopf 40 angehoben und transportiert das unbearbeitete Werkstück 14 schliesslich in Axialrichtung R_{A} in den Werkstück-Bearbeitungsbereich B, knapp oberhalb und etwa mittig zwischen Schleif- und Regelscheibe 28, 30 und in einer Linie Y-Y etwa senkrecht über dem Auflagelineal 24. Der Ladekopf 40 senkt sich danach etwas ab, um die Distanz zum Auflagelineal 24 zu verkürzen. Gleichzeitig wird eine nicht dargestellte Abdeckung zum Schutz der Schleif- und/oder Regelscheibe 28, 30 abgesenkt. Schliesslich wird das unbearbeitete Werkstück 14 durch eine Bewegung des Ladekopfs 40 um etwa die Länge des Werkstücks 14 in Richtung R_{A}' entsichert, wobei ein zuvor aktivierter temporärer und nach oben gerichteter Fluidstrom 48' das unbearbeitete Werkstück 14 gegen die Schwerkraft hält. Sodann wird das Werkstück 14 mit einem temporären und nach unten gerichteten Fluidstrom 48 auf das Auflagelineal 24 abgesenkt, wobei gleichzeitig der entgegengerichtete Fluidstrom 48' reduziert wird. Die Fallzeit des Werkstücks 14 wird auf diese Weise über den freien Fall hinaus beschleunigt, um den zeitlichen Ablauf des Werkstückwechsels weiter zu optimieren. Gleichzeitig ist aber durch den Gegenstrom 48' ein relativ weiches Auftreffen des unbearbeiteten Werkstücks 14 auf dem Auflagelineal 24 gewährleistet.

Nachdem der Ladekopf 40 wieder angehoben und in Axialrichtung R_{A}' aus dem Werkstück-Bearbeitungsbereich B in den Werkstück-Bereitstellungsbereich A beziehungsweise den Werkstück-Abholbereich C zurückgefahren ist, erfolgt eine Centerless-Schleifoperation in an sich bekannter Weise. Gleichzeitig wird der Ladekopf 40 nach Absenken in bereits beschriebener Weise mit einem weiteren, unbearbeiteten Werkstück 14 beladen, gesichert und durch Anheben für einen weiteren Arbeitszyklus vorbereitet.

Nachdem die Schleifoperation beendet ist, fahren die Schleif- und die Regelscheibe 28, 30 je etwa um eine Distanz, welche gleich 0.9 mal dem Radius des Werkstücks ist, in Radialrichtung R_{R}, R_{R}' vom Auflagelineal 24 weg, sodass eine der Übersichtlichkeit wegen nicht dargestellte Kunststoffabdeckung zwischen Schleifscheibe 28 und Auflagelineal 24 beziehungsweise zwischen Regelscheibe 30 und Auflagelineal 24 abgesenkt werden kann. Eine im Arbeitstakt betätigte, nicht dargestellte Abdeckung verhindert beim späteren Absenken/Anheben der Werkstücke 14, 22 deren Berührung mit der drehenden Schleif- und/oder Regelscheibe 28, 30.

Etwa gleichzeitig mit der Radialbewegung der Schleif- und/oder Regelscheibe 28, 30 fährt der Ladekopf 40, welcher ein unbearbeitetes Werkstück 14 mit sich führt, wieder in Axialrichtung R_{A}' in den Werkstück-Bearbeitungsbereich B, sodass der im Augenblick leere Ladeplatz 44' oberhalb und etwa mittig zwischen Schleif- und Regelscheibe 28, 30 und in einer Linie Y-Y etwa senkrecht über dem Auflagelineal 24 zu stehen kommt. Der Ladekopf 40 senkt sich wiederum etwas ab, um die Distanz zum Auflagelineal 24 zu verkürzen.

Nun erfolgt das Anheben des bearbeiteten Werkstücks 22 mit dem temporären und nach oben gerichteten Fluidstrom 48'. Nachdem der Ladeplatz 44' mit dem bearbeiteten Werkstück 22 bestückt ist, taktet der Querschieber 46 um etwa die Länge eines Werkstücks 22 in Axialrichtung R_{A}' und sichert dabei das bearbeitete Werkstück 22. Wie erwähn, wird in einer weiteren, nicht dargestellten Variante bei der Taktbewegung des Querschiebers 46 das bearbeitete Werkstück 22 in einen Schlauch oder ein Rohr ausgestossen, welches das Werkstück 22 mittels einer Luftblaseinheit an eine Werkstückempfangsstation mit einer Dämpfungseinheit bläst.

Im Augenblick befindet sich das neue, unbearbeitete Werkstück 14 knapp oberhalb und etwa mittig zwischen Schleif- und Regelscheibe 28, 30 und in einer Linie Y-Y etwa senkrecht über dem Auflagelineal 24. Das Werkstück 14 wird wiederum vom Fluidstrom 48' (Fig. 4) in der beschriebenen Weise gegen die Schwerkraft gehalten, worauf es wie beschrieben auf das Auflagelineal 24 abgesenkt wird und worauf der Ladekopf 40 mit einem neuen, unbearbeiteten Werkstück 14 bestückt und für einen weiteren Arbeitszyklus vorbereitet wird.

Wie erwähnt zeigt Fig. 4 eine Teilansicht von vorne auf den High-Speed-Lader 34 der erfindungsgemässen Centerless-Schleifmaschine 32 gemäss Fig. 3, wobei mit R_{B} die Beladungsrichtung mit R_{E} die Entladungsrichtung eingezeichnet ist. Es sind zwei Fluidkanäle 50 durch entsprechende Öffnungen durch den Ladekopf 40 und den Querschieber 46 hindurch nach unten gerichtet. Zwei weitere Fluidkanäle 50' sind zwischen Schleif- und Regelscheibe 28, 30 durch das Auflagelineal 24 hindurch nach oben und den Fluidkanälen 50 etwa entgegengerichtet. In weiteren, nicht dargestellten Ausführungsvarianten sind die Durchflussöffnungen der Fluidkanäle 50, 50' veränderbar, d. h. vergrösser- und/oder verkleinerbar.

Die Fluidströme 38, 38', 48 und/oder 48' sind steuer- und regelbar. Über eine Druckveränderung kann die Fluidgeschwindigkeit den aktuellen Bedürfnissen mit Blick auf die Bauteileigenschaften, z. B. Form, Grösse oder Gewicht, angepasst werden. Die veränderbaren Parameter/beweglichen Elemente sind je nach Ausführung mittels Regelventilen und/oder Softwareprogrammen über die vorgesehenen Schnittstellen und/oder Motoren einstellbar und mit der Centerless-Schleifmaschine 32 taktbar/synchronisierbar, sodass der High-Speed-Lader 34 als integrales Einbau- oder als unabhängiges Anbaumodul für jede Centerless-Schleifmaschine 32 nutzbar ist.

Da die Werkstücke 14, 22, welche in der Centerless-Schleifmaschine 32 bearbeitet beziehungsweise mit dem High-Speed-Lader 34 transportiert werden, oft sehr empfindlich sind, kann die Auftreffgeschwindigkeit beziehungsweise die negative Beschleunigung und die damit zusammenhängende Auftreffkraft
- eines unbearbeiteten Werkstücks 14 auf die Zwischenablage 36, eine Halbschale eines Querschiebers 46 und/oder das Auflagelineal 24, beziehungsweise umgekehrt
- eines bearbeiteten Werkstücks 22 auf das Auflagelineal 24, eine Halbschale eines Querschiebers 46 und/oder die Zwischenablage 36
dadurch verkleinert werden, dass Fluidgeschwindigkeiten beziehungsweise Fluidströme 38, 38', 48 und/oder 48' steuer- und/oder regelbar und gleichzeitig einander entgegengerichtet sind.

Schliesslich kann der High-Speed-Lader 34 für Centerless-Schleifmaschinen 32, welche gleichzeitig mehrere Werkstücke 14, 22 bearbeiten, in einer ebenfalls nicht dargestellten Variante gleichzeitig mehrere Werkstücke 14, 22 be- und/oder entladen.

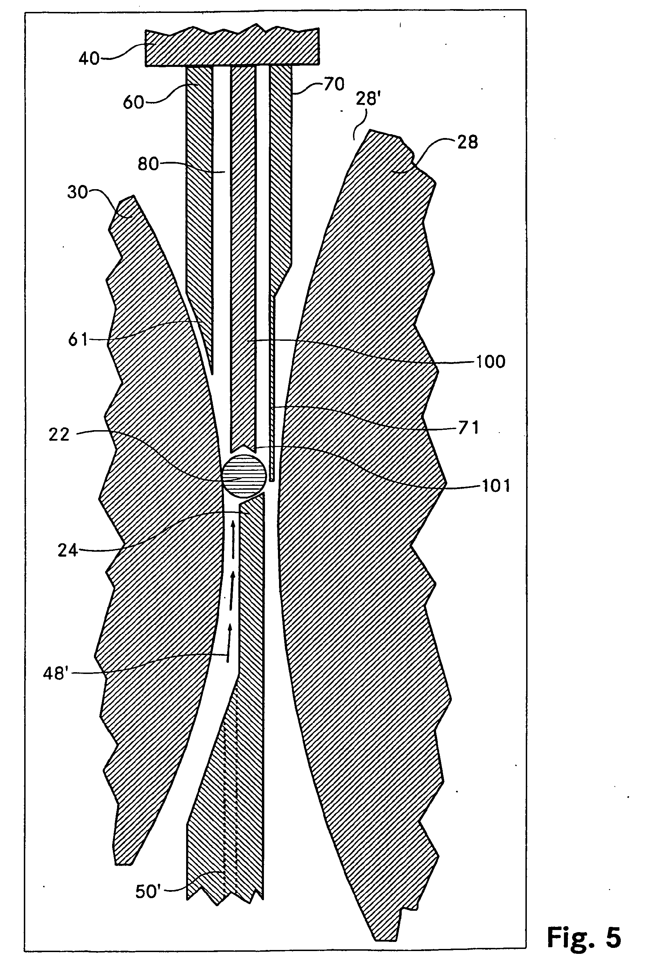

**Fig. 5** zeigt eine weitere bevorzugte Variante der Erfindung im Querschnitt im Bereich der Linie Y-Y (Fig. 4) des Werkstückbearbeitungsbereichs B in Wechselstellung. Die Regelscheibe 30 und die Schleifscheibe 28 befinden sich dabei in zurückgezogener Position und der Ladekopf 40 ist vollständig abgesenkt.

Es wird davon ausgegangen, dass ein bearbeitetes längliches (hier einfachheitshalber als zylinderförmig angenommenes) Werkstück 22 auf dem oberen Ende des Auflagelineals 24 sitzt und auf der einen Seite die Regelscheibe 30 berührt. Alle drei zylindrischen Körper (Schleifscheibe, Regelscheibe und Werkstück) weisen dabei parallele Drehachsen auf und das Auflagelineal 24 ist so ausgestaltet, dass das Zentrum des Werkstücks 22 ungefähr über einer gedachten Verbindungslinie zwischen den Zentren der Regelscheibe 30 und der Schleifscheibe 28 positioniert ist (übermittige Position). Die Schleifscheibe 28 rotiert im Gegenuhrzeigersinn, bzw. die Schleiffläche 28' bewegt sich im Bereich des Auflagelineals 24 von oben nach unten. Die Regelscheibe 30 rotiert gleichsinnig.

Aus dem über dem Werkstück 22 positionierten Ladekopf 40 reicht ein vertikal verfahrbarer Stössel 100 aus Metall in seiner maximalen Auslenkung aus dem Ladekopf 40 bis auf wenige Millimeter an die obere Mantelfläche des Werkstücks 22. Der Stössel 100 ist als flacher Stab ausgebildet und weist eine dem Werkstück 22 zugewandte, symmetrische V-Nut 101 auf, welche der automatischen Zentrierung des Werkstücks 22 dient. Die Dicke des Stössels 100 entspricht etwa 0.8-mal dem Durchmesser des Werkstücks. In Richtung der Drehachse der Schleifscheibe 28 bzw. der Regelscheibe 30 (R_{A}' in Fig. 1) weist der Stössel 100 eine Breite auf, welche ungefähr der Länge des Werkstücks 22 entspricht.

Auf der Seite der Regelscheibe 30 ist neben dem Stössel 100 ein erstes (regelscheibenseitiges) Schutzelement 60 vorgesehen. Es ragt z. B. als vertikales Metallblech vom Ladekopf 40 herunter. Auf der Seite der Schleifscheibe ist neben dem Stössel 100 ein zweites (schleifscheibenseitiges) Schutzelement 70 vorgesehen, welches parallel zum regelscheibenseitigen Schutzelement 60 auf der anderen Seite des Stössels 100 angebracht ist. Beide Schutzelemente 60, 70 sind an ihrem unteren Ende sehr dünn ausgebildet, damit sie den Fluidstrom insbesondere von der Regelscheibe quasi abschälen und soweit als möglich in Richtung Werkstück nach unten bewegt werden können. Sie können aber in ihren oberen Bereichen etwas dicker und stabiler ausgebildet sein. Sie weisen in Richtung der Drehachse der Schleifscheibe 28 oder Regelscheibe 30 (R_{A}' in Fig. 1) eine Breite auf, welche gleich der Länge des Ladekopfs 40 in der axialen Richtung (R_{A}' in Fig. 1) ist. Die Schutzelemente 60, 70 sollen vorzugsweise mindestens so breit wie das längste Werkstück sein, das bearbeitet wird.

Das regelscheibenseitige Schutzelement 60 verjüngt sich in seinem unteren Bereich derart, dass eine untere Endfläche 61 gebildet wird, welche eine der Krümmung der Regelscheibe 30 entsprechende Krümmung aufweist, so dass die gesamte Endfläche 61 einen konstanten Abstand von wenigen Millimetern zur Regelscheibe 30 aufweist. Das schleifscheibenseitige Schutzelement 70 beinhaltet einen unteren geraden Abschnitt 71, welcher eine wesentlich geringere horizontale Breite aufweist als der obere Teil damit das Schutzelement in den engen Bereich zwischen Werkstück 22 und Schleifscheibe 28 passt. Der unterste Teil des Abschnitts 71 kommt beim Werkstückswechsel ungefähr zwischen der Schleifscheibe 28 und dem bearbeiteten Werkstück 22 zu liegen und weist zur Schleifscheibe 28 einen minimalen Abstand von wenigen Millimetern auf. Damit ist das schleifscheibenseitige Schutzelement 70 in vertikaler Richtung insgesamt länger als das regelscheibenseitige Schutzelement 60.

Der innere Oberflächenabstand der beiden Schutzelemente 60, 70 entspricht ca. 1.2-mal dem Durchmesser des Werkstücks 22, sodass dieses ohne zu verklemmen zwischen den beiden Schutzelementen 60, 70 bewegt werden kann. Die beiden Schutzelemente bilden einen Kanal 80, welcher insbesondere zur Kanalisierung der Fluidströme 48' dient.

Beim Werkstückwechsel werden die Schleifscheibe 28 und die Regelscheibe 30 wie vorstehend beschrieben und in Fig. 5 dargestellt, im laufenden Betrieb je um eine Distanz, welche gleich ca. 0.9 mal dem Radius des Werkstücks 22 ist, in radialer Richtung (R_{R} und R_{R}' in Fig. 1) vom Auflagelineal 24 weggefahren. Die Schutzelemente 60, 70 und der Stössel 100 werden vom Ladekopf her nach unten in die Nähe des Auflagelineals 24 gefahren. Gleichzeitig oder unmittelbar danach wird über den Fluidkanal 50', welcher innerhalb des Auflagelineals 24 vertikal in Richtung des Werkstücks 22 verläuft, ein Fluidstrom 48' ausgestossen. Dieser wird durch den dünnen Spalt zwischen der Regelscheibe 30 und dem oberen Ende des Auflagelineals 24 geleitet und erfasst das auf dem Auflagelineal 24 liegende Werkstück 22 von unten. Der Fluidstrom 48' drückt dabei das Werkstück 22 gegen den Stössel 100, worauf dieses aufgrund der V-Nut 101 auf dem Stössel automatisch zentriert wird. Der Stössel 100 wird nun durch einen nicht gezeigten Antrieb im Ladekopf 40 in vertikaler Richtung nach oben bewegt. Aufgrund des anhaltenden Fluidstroms 48' wird das Werkstück 22 entgegen der Schwerkraft während der gesamten Bewegung an den Stössel 100 gedrückt und durch diesen geführt. Das Werkstück gelangt so zwischen den beiden Schutzelemente 60, 70 hindurch in den Ladekopf 40. Die beiden Schutzelemente 60, 70 kanalisieren dabei die Fluidströme 48', so dass diese nicht in Richtung der Schleifscheibe 28 oder der Regelscheibe 30 entweichen können. Zudem wird der Fluidstrom 48' durch die beiden Schutzelemente 60, 70 vor Verwirbelung durch die starke Luftströmung, welche im Bereich der Schleiffläche 28' der Schleifscheibe 28 vorliegt, bestmöglich geschützt. Im Ladekopf 40 wird das Werkstück vom Stössel 100 entfernt und wie bereits beschrieben weitertransportiert.

Zum erneuten Beladen wird bei fliessendem Fluidstrom 48' ein neues unbearbeitetes Werkstück 14 im Ladekopf 40 auf den Stössel 100 geschoben und der Stössel 100 durch den nicht gezeigten Antrieb nach unten bewegt. Das unbearbeitete Werkstück 14 wird dabei ebenfalls durch die Fluidströme 48' entgegen der Schwerkraft gegen den Stössel 100 gedrückt und durch diesen nach unten geführt. Sobald der Stössel 100 vollständig ausgefahren ist, wird der Fluidstrom 48' abgestellt, wodurch das Werkstück 14 auf dem Auflagelineal 24 zu liegen kommt. Anschliessend wird der Ladekopf 40 mit den Schutzelementen 60, 70 und dem Stössel 100 in vertikaler Richtung vollständig aus dem Schleifbereich zurückgefahren. Der Schleifprozess erfolgt wie bereits beschrieben nachdem die Schleifscheibe 28 sowie die Regelscheibe je um eine Distanz, welche gleich ca. 0.9 mal dem Radius des Werkstücks 22 ist, in radialer Richtung (R_{R} und R_{R}' in Fig. 1) zum Auflagelineal 24 hingefahren wurden.

Je nach Ausgestaltung der Schleifmaschine kann in einer weiteren bevorzugten Variante auch nur ein Stössel 100 zur Führung des Werkstücks 22 verwendet und auf die Schutzelemente 60, 70 verzichtet werden. Dies funktioniert insbesondere bei sehr grossen Schleifschieben 28 und Regelscheiben 30, welche zudem aufgrund der Werkstückgrösse sehr nahe aneinander grenzen und dadurch ein sehr enges freies Volumen oberhalb des Werkstücks bilden, welches selbst schon eine genügend kanalisierende Wirkung auf den Fluidstrom 48' hat.

Ebenso kann es vorteilhaft sein, nur auf einer Seite, insbesondere auf der Seite der sehr schnell rotierenden und mit einem starken Luftstrom umgebenen Schleifscheibe, ein Schutzelement 70 anzubringen. Damit kann bei engen Verhältnissen im Schleifbereich Platz gewonnen werden und trotzdem wird der Fluidstrom 48' zum Anheben des Werkstücks 22 geschützt.

Der Stössel 100, wie er bei Fig. 5 beschrieben ist, kann anstelle der V-Nut auch eine andere das Werkstück 22 zentrierende Form aufweisen. Insbesondere runde und konkave Vertiefungen oder Aussparungen, welche bevorzugt zumindest teilweise zur oberen Hälfte des Werkstücks komplementär ausgestaltet sind, eignen sich gut. Alternativ kann aber auch ein rein quaderförmiger Stössel verwendet werden, welcher an seinem Ende seitlich angebrachte Leit- oder Führungsvorrichtungen, z. B. in Form von dünnen Blechen, Zähnen oder Kunststoffvorständen, aufweist.

Des Weitern kann der Stössel 100 auch aus einer parallel zum Werkstück 22 vorliegenden Profilleiste bestehen, welche z. B. über eine oder mehrere Achsen oder weitere Profilleisten mechanisch mit dem Antrieb oder einem Federmechanismus im Ladekopf 40 verbunden ist.

Die Breite des Stössels kann auch kürzer als das grösste zu beladende Werkstück sein. Wie nahe er an das Werkstück herangefahren wird, hängt davon ab, wie lang - oder vielmehr wie kurz - das Werkstück ist. Vorzugsweise ist der Abstand zwischen Auflagelineal und Stössel kürzer als die Länge des Werkstücks.

Der Abstand der Schutzelemente ist so bemessen, dass der Fluidstrom (welcher insbesondere ein Kühlschmiermittelstrahl ist) das Werkstück gut befördern kann, ohne dass sich das Werkstück überschlägt oder eine Rotation durchführt.

Der Übersichtlichkeit wegen wird in allen Zeichnungen auf die Darstellung von Sicherheitseinrichtungen, wie zum Beispiel durchsichtige Kunststoffabdeckungen oder Abdeckungen aus Sicherheitsglas, welche umstehende Personen vor Spritzern, Funken und/oder Fehlhandling schützen, verzichtet.

## Patentansprüche

1. Verfahren zum automatischen Beladen und Entladen einer Centerless-Schleifmaschine (32) mit Werkstücken (14, 22), welche Schleifmaschine (32) zum Aussenrundschleifen vorgesehen ist und eine Beladungs-/Entladungseinrichtung und wenigstens eine Bearbeitungseinheit mit je einer Schleifscheibe (28), einer Regelscheibe (30) und einem Auflagelineal (24) für die Werkstücke (14, 22) umfasst,
**dadurch gekennzeichnet, dass**
die bearbeiteten Werkstücke (22) mittels eines temporären, gerichteten Fluidstroms (48') vom Auflagelineal (24) abgehoben und abtransportiert werden.

2. Verfahren nach Anspruch 1, **dadurch gekennzeichnet, dass** zumindest die Schleifscheibe (28) weiterrotiert, während die bearbeiteten Werkstücke (22) mittels des temporären, gerichteten Fluidstroms (48') vom Auflagelineal (24) abgehoben und abtransportiert werden.

3. Verfahren nach Anspruch 1 oder 2, **dadurch gekennzeichnet, dass** beim Abheben des Werkstücks (22) oberhalb des Auflagelineals (24) ein kanalförmiger Bereich definiert wird, in welchem der Fluidstrom (48') beim Abheben des Werkstücks (22) geführt werden kann.

4. Verfahren nach einem der Ansprüche 1 bis 3, **dadurch gekennzeichnet, dass** das Werkstück (22) beim Abheben durch den Fluidstrom (48') an eine Führungsvorrichtung (100) gedrückt wird, sodass ein Überschlagen oder eine Rotation des Werkstücks (22) verhindert wird.

5. Verfahren nach einem der Ansprüche 1 bis 4, **dadurch gekennzeichnet, dass** die bezüglich der Schleif- und Regelscheibe (28, 30) bearbeiteten Werkstücke (22) mit dem vorzugsweise steuer- und/oder regelbaren Fluidstrom (48') zu einem Anschlag (46') gehoben und mittels eines Längsschiebers in Axialrichtung (R_{A}') oder mittels eines Dreh- oder Querschiebers (46) in Radialrichtung ausgestossen werden, wobei gleichzeitig das unbearbeitete Werkstück (14) über das Auflagelineal (24) geschoben wird.

6. Verfahren nach einem der Ansprüche 1 bis 5, **dadurch gekennzeichnet, dass** unmittelbar vor dem Einschalten des Fluidstroms (48') ein oder mehrere Schutzelemente (60, 70) wenigstens entlang der Schleifscheibe (28) im Arbeitstakt nach unten gestossen und wieder angehoben werden, vorzugsweise ein Metallblech und/oder ein Kunststoffschutz.

7. Verfahren nach einem der Ansprüche 1 bis 6, **dadurch gekennzeichnet, dass** die Schleifscheibe (28) und/oder die Regelscheibe (30) vor dem Einschalten des Fluidstroms (48') in radialer Richtung (R_{R}) zurückgefahren wird, vorzugsweise etwa um maximal eine Distanz, welche gleich dem Radius des Werkstücks ist.

8. Verfahren nach einem der Ansprüche 1 bis 7, **dadurch gekennzeichnet, dass** die zu bearbeitenden Werkstücke (14) aus einem Ladekopf (40) entnommen werden und mit einem temporären, gerichteten Fluidstrom (48), welcher vorzugsweise steuer- und/oder regelbar ist, auf das Auflagelineal (24) abgesenkt werden.

9. Verfahren nach einem der Ansprüche 1 bis 8, **dadurch gekennzeichnet, dass** temporäre, gerichtete Fluidströme (38, 38') und/oder (48, 48') gleichzeitig in unterschiedlicher Stärke gegeneinander gerichtet werden, welche vorzugsweise steuer- und/oder regelbar sind, und eine resultierende Transportrichtung für die Werkstücke (14,28) erzeugen.

10. Verfahren nach einem der Ansprüche 1 bis 9, **dadurch gekennzeichnet, dass** nach dem Bearbeiten des Werkstücks (14) eine Wechseleinheit (42) eingefahren und/oder eingeschwenkt und nach dem Absenken des zu bearbeitenden Werkstücks (14) wieder ausgefahren und/oder ausgeschwenkt wird.

11. Verfahren nach einem der Ansprüche 1 bis 10, **dadurch gekennzeichnet, dass** als Fluid ein Kühlschmiermittel und/oder Luft eingesetzt wird.

12. Verfahren nach einem der Ansprüche 8 bis 11, **dadurch gekennzeichnet, dass** mit einer Luftblaseinheit bearbeitete Werkstücke (22) nach dem Werkstückwechsel vom Ladekopf (40) oder vom Werkstück-Abholbereich (C) an eine Werkstückempfangsstation und/oder unbearbeitete Werkstücke (14) direkt von einem Werkstück-Bereitstellungsbereich (A) oder einem Magazin in den Ladekopf (40) geblasen werden.

13. Centerless-Schteifmaschine (32) zum Aussenrundschleifen und zur Durchführung des Verfahrens nach einem der Ansprüche 1 bis 12, welche eine Beladungs-/Entladungseinrichtung und wenigstens eine Bearbeitungseinheit mit einer Schleifscheibe (28), einer Regelscheibe (30) und einem Auflagelineal (24) für die Werkstücke (14, 22) umfasst,
**dadurch gekennzeichnet, dass**
in oder am Auflagelineal (24) mindestens ein Fluidkanal (50') mit wenigstens einer Austrittsöffnung an und/oder in einer Auflagefläche vorgesehen ist, zum Zuführen eines Fluids, um die bearbeiteten Werkstücke (22) mittels eines temporären, gerichteten Fluidstroms (48') vom Auflagelineal (24) abzuheben und abzutransportieren.

14. Centerless-Schleifmaschine (32) nach Anspruch 13, **dadurch gekennzeichnet, dass** die Beladungs-/Entladungseinrichtung einen Ladekopf (40) bildet, welcher ein-/ausschwenkbar, ein-/ausfahrbar und/oder kipp-/drehbar ausgebildet und vorzugsweise mittels einer Kurvenscheibe gesteuert ist.

15. Centerless-Schleifmaschine (32) nach Anspruch 13 oder 14, **dadurch gekennzeichnet, dass** die Beladungs-/Entladungseinrichtung als Wechseleinheit (42) einen Längs-, Dreh- oder einen Querschieber (46) für den Werkstückwechsel umfasst.

16. Centerless-Schleifmaschine (32) nach einem der Ansprüche 13 bis 15, **dadurch gekennzeichnet, dass** in der Beladungs-/Entladungseinrichtung ein Längs-, Dreh- oder Querschieber (46) derart axial verschiebbar ist, dass wenigstens ein im Längs-, Dreh- oder Querschieber (46) vorhandener Ladeplatz (44, 44') eine Werkstück (14, 22) sichernde und/oder eine Werkstück (14, 22) entsichernde Position erreicht.

17. Centerless-Schleifmaschine (32) nach einem der Ansprüche 13 bis 16, **dadurch gekennzeichnet, dass** die Beladungs-/Entladungseinrichtung eine Führungsvorrichtung (100), insbesondere ein absenkbarer und anhebbarer Stössel, aufweist.

18. Centerless-Schleifmaschine (32) nach einem der Ansprüche 13 bis 16, **dadurch gekennzeichnet, dass** absenk- und anhebbare Schutzelemente (60, 70) für eine Mantelfläche der Schleifscheibe (28) und/oder der Regelscheibe (30) angeordnet sind, insbesondere Metallschutzbleche oder Kunststoffschutze.

19. Centerless-Schleifmaschine (32) nach einem der Ansprüche 13 bis 17, **dadurch gekennzeichnet, dass** wenigstens zwei der Elemente Schleifscheibe (28), Regelscheibe (30) und Auflagelineal (24) verschiebbar sind, nämlich die Schleif- und die Regelscheibe (28, 30) in radialer Richtung (R_{R}, R_{R}') und/oder das Auflagelineal (24) in seiner Längs- und/oder Querrichtung.

20. Centerless-Schleifmaschine (32) nach Anspruch 13, **dadurch gekennzeichnet, dass** die Beladungs-/Entladungseinrichtung absenkbare und anhebbare Schutzelemente (60, 70) aufweist, um den Fluidstrom (48') zu kanalisieren.

21. Centerless-Schleifmaschine (32) nach Anspruch 20, mit einem Ladeplatz für das Werkstück, aus welchem das Werkstück mit einem absenkbaren Stössel (100) gegen einen Druck des Fluidstroms nach unten gebracht werden kann.

## Claims

1. Method for the automatic loading and unloading of a centreless grinding machine (32) with workpieces (14, 22), which grinding machine (32) is intended for external cylindrical grinding and comprises a loading/unloading means and at least one machining unit, each having a grinding wheel (28), a control wheel (30) and a work rest blade (24) for the workpieces (14, 22), **characterized in that** the machined workpieces (22) are lifted and transported away from the work rest blade (24) by means of a temporary, directed fluid flow (48').

2. Method according to Claim 1, **characterized in that** at least the grinding wheel (28) continues to rotate, while the machined workpieces (22) are lifted and transported away from the work rest blade (24) by means of the temporary, directed fluid flow (48').

3. Method according to Claim 1 or 2, **characterized in that**, when the workpiece (22) is being lifted above the work rest blade (24), a channel-shaped region is defined in which the fluid flow (48') can be directed when lifting the workpiece (22).

4. Method according to one of Claims 1 to 3, **characterized in that** the workpiece (22), when being lifted by the fluid flow (48'), is pressed against a guide device (100), such that overturning or rotation of the workpiece (22) is prevented.

5. Method according to one of Claims 1 to 4, **characterized in that** the workpieces (22) machined with respect to the grinding and control wheels (28, 30) are lifted to a stop (46') by means of the preferably controllable fluid flow (48') and are discharged in the axial direction (R_{A}') by means of a longitudinal slide or in the radial direction by means of a rotary or transverse slide (46), the unmachined workpiece (14) at the same time being pushed above the work rest blade (24) .

6. Method according to one of Claims 1 to 5, **characterized in that**, immediately before the fluid flow (48') is switched on, one or more protective elements (60, 70), preferably a metal plate and/or a plastic guard, are pushed downwards and lifted again at least along the grinding wheel (28) during the working cycle.

7. Method according to one of Claims 1 to 6, **characterized in that** the grinding wheel (28) and/or the control wheel (30) is moved back in the radial direction (R_{R}), preferably by at most a distance which is equal to the radius of the workpiece, before the fluid flow (48') is switched on.

8. Method according to one of Claims 1 to 7, **characterized in that** the workpieces (14) to be machined are removed from a loading head (40) and are lowered onto the work rest blade (24) using a temporary, directed fluid flow (48), which is preferably controllable.

9. Method according to one of Claims 1 to 8, **characterized in that** temporary, directed fluid flows (38, 38') and/or (48, 48'), which are preferably controllable, are directed towards one another with different intensity and produce a resulting transport direction for the workpieces (14, 22).

10. Method according to one of Claims 1 to 9, **characterized in that**, after the machining of the workpiece (14), a changing unit (42) is moved and/or swung into place and, after the lowering of the workpiece (14) to be machined, is moved and/or swung out again.

11. Method according to one of Claims 1 to 10, **characterized in that** the fluid used is a cooling lubricant and/or air.

12. Method according to one of Claims 8 to 11, **characterized in that**, by means of an air-blowing unit, machined workpieces (22) are blown, after the workpiece change, from the loading head (40) or from the workpiece-collecting region (C) to a workpiece-receiving station and/or unmachined workpieces (14) are blown directly from a workpiece-preparation region (A) or a magazine into the loading head (40).

13. Centreless grinding machine (32) for external cylindrical grinding and for carrying out the method according to one of Claims 1 to 12, which comprises a loading/unloading means and at least one machining unit having a grinding wheel (28), a control wheel (30) and a work rest blade (24) for the workpieces (14, 22), **characterized in that** at least one fluid channel (50') having at least one outlet opening on and/or in a supporting surface is provided in or on the work rest blade (24) for feeding a fluid in order to lift and transport away the machined workpieces (22) from the work rest blade (24) by means of a temporary, directed fluid flow (48') .

14. Centreless grinding machine (32) according to Claim 13, **characterized in that** the loading/unloading means forms a loading head (40) which is designed such that it can be swung in/out, moved in/out and/or tilted/rotated and is preferably controlled by means of a cam plate.

15. Centreless grinding machine (32) according to Claim 13 or 14, **characterized in that** the loading/unloading means, as changing unit (42), comprises a longitudinal, rotary or transverse slide (46) for the workpiece change.

16. Centreless grinding machine (32) according to one of Claims 13 to 15, **characterized in that** a longitudinal, rotary or transverse slide (46) is axially displaceable in the loading/unloading means in such a way that at least one loading place (44, 44') present in the longitudinal, rotary or transverse slide (46) reaches a position securing a workpiece (14, 22) and/or releasing a workpiece (14, 22).

17. Centreless grinding machine (32) according to one of Claims 13 to 16, **characterized in that** the loading/unloading means has a guide device (100), in particular a lowerable and liftable plunger.

18. Centreless grinding machine (32) according to one of Claims 13 to 16, **characterized in that** lowerable and liftable protective elements (60, 70), in particular metal protective plates or plastic guards, are arranged for a lateral surface of the grinding wheel (28) and/or of the control wheel (30).

19. Centreless grinding machine (32) according to one of Claims 13 to 17, **characterized in that** at least two of the elements - grinding wheel (28), control wheel (30) and work rest blade (24) - are displaceable, namely the grinding and control wheels (28, 30) in the radial direction (R_{R}, R_{R}') and/or the work rest blade (24) in its longitudinal and/or transverse direction.

20. Centreless grinding machine (32) according to Claim 13, **characterized in that** the loading/unloading means has lowerable and liftable protective elements (60, 70) in order to channel the fluid flow (48').

21. Centreless grinding machine (32) according to Claim 20, having a loading space for the workpiece, from which the workpiece can be moved downwards against a pressure of the fluid flow by means of a lowerable plunger (100).

## Revendications

1. Procédé pour charger et décharger automatiquement une rectifieuse sans centre (32) avec des pièces à usiner (14, 22), ladite rectifieuse (32) étant prévue pour la rectification de surfaces extérieures cylindriques, et comprenant un dispositif de chargement/déchargement et au moins une unité d'usinage munie d'un disque abrasif respectif (28), d'un disque de réglage (30) et d'une règle d'appui (24) pour les pièces à usiner (14, 22),
**caractérisé en ce que**
les pièces usinées (22) sont soulevées de la règle d'appui (24) au moyen d'un jet de fluide orienté temporaire (48') et sont emportées.

2. Procédé selon la revendication 1, **caractérisé en ce qu'**au moins le disque abrasif (28) continue de tourner tandis que les pièces usinées (22) sont soulevées de la règle d'appui (24) au moyen du jet de fluide orienté temporaire (48') et sont emportées.

3. Procédé selon la revendication 1 ou 2, **caractérisé en ce que** lors du soulèvement de la pièce (22) au-dessus de la règle d'appui (24), une région en forme de canal est définie, dans laquelle le jet de fluide (48') peut être guidé lors du soulèvement de la pièce (22).

4. Procédé selon l'une quelconque des revendications 1 à 3, **caractérisé en ce que** la pièce (22), lors du soulèvement par le jet de fluide (48'), est pressée contre un dispositif de guidage (100) de sorte qu'un basculement ou une rotation de la pièce (22) ne puisse pas se produire.

5. Procédé selon l'une quelconque des revendications 1 à 4, **caractérisé en ce que** les pièces (22) usinées avec les disques abrasifs et le disque de réglage (28, 30), sont soulevées jusqu'à une butée (46') avec le jet de fluide (48') de préférence commandable et/ou réglable et sont éjectées dans la direction axiale (R_{A}') au moyen d'un coulisseau longitudinal ou dans la direction radiale au moyen d'un coulisseau rotatif ou transversal (46), la pièce (14) non usinée étant simultanément poussée sur la règle d'appui (24).

6. Procédé selon l'une quelconque des revendications 1 à 5, **caractérisé en ce que** directement avant la connexion du jet de fluide (48'), un ou plusieurs éléments de protection (60, 70), de préférence une tôle métallique et/ou une protection en plastique, sont enfoncés vers le bas au moins le long du disque abrasif (28) pendant le cycle de travail puis sont à nouveau relevés.

7. Procédé selon l'une quelconque des revendications 1 à 6, **caractérisé en ce que** le disque abrasif (28) et/ou le disque de réglage (30) sont ramenés dans la direction radiale (R_{R}) avant la connexion du jet de fluide (48'), de préférence approximativement sur une distance maximale qui est égale au rayon de la pièce.

8. Procédé selon l'une quelconque des revendications 1 à 7, **caractérisé en ce que** les pièces à usiner (14) sont prélevées d'une tête de chargement (40) et sont abaissées sur la règle d'appui (24) avec un jet de fluide (48) orienté, temporaire, qui peut être de préférence commandé et/ou régulé.

9. Procédé selon l'une quelconque des revendications 1 à 8, **caractérisé en ce que** des jets de fluide orientés, temporaires (38, 38') et/ou (48,48') sont orientés l'un vers l'autre simultanément avec des intensités différentes, peuvent de préférence être commandés et/ou régulés, et produisent une direction de transport résultante pour les pièces (14, 28).

10. Procédé selon l'une quelconque des revendications 1 à 9, **caractérisé en ce qu'**après l'usinage de la pièce (14), une unité de changement (42) est introduite et/ou amenée par pivotement et après l'abaissement de la pièce à usiner (14), est à nouveau ressortie et/ou écartée par pivotement.

11. Procédé selon l'une quelconque des revendications 1 à 10, **caractérisé en ce que** l'on utilise comme fluide un lubrifiant de refroidissement et/ou de l'air.

12. Procédé selon l'une quelconque des revendications 8 à 11, **caractérisé en ce que** des pièces (22) usinées avec une unité de soufflage d'air, après le changement de pièce par la tête de chargement (40) ou par la région de soulèvement de pièce (C), sont amenées par soufflage à un poste de réception de pièces et/ou des pièces non usinées (14) sont amenées par soufflage directement d'une zone de fourniture des pièces (A) ou d'un magasin dans la tête de chargement (40).

13. Rectifieuse sans centre (32) pour la rectification de surfaces extérieures cylindriques et pour la mise en oeuvre du procédé selon l'une quelconque des revendications 1 à 12, qui comprend un dispositif de chargement / déchargement et au moins une unité d'usinage avec un disque abrasif (28), un disque de réglage (30) et une règle d'appui (24) pour les pièces (14, 22),
**caractérisée en ce que**
dans ou sur la règle d'appui (24) est disposé au moins un canal fluidique (50') avec au moins une ouverture de sortie sur et/ou dans une surface d'appui, pour acheminer un fluide, afin de soulever les pièces usinées (22) au moyen d'un jet de fluide orienté temporaire (48') de la règle d'appui (24) et de les emporter.

14. Rectifieuse sans centre (32) selon la revendication 13, **caractérisée en ce que** le dispositif de chargement/déchargement forme une tête de chargement (40), qui est réalisée de manière à pouvoir être amenée ou écartée par pivotement et/ou basculée/tournée, et qui est de préférence commandée par une came.

15. Rectifieuse sans centre (32) selon la revendication 13 ou 14, **caractérisée en ce que** le dispositif de chargement/déchargement comprend, en tant qu'unité de changement (42), un coulisseau longitudinal, rotatif ou transversal (46) pour le changement de pièce.

16. Rectifieuse sans centre (32) selon l'une quelconque des revendications 13 à 15, **caractérisé en ce que**, dans le dispositif de chargement/déchargement, un coulisseau longitudinal, rotatif ou transversal (46) peut être déplacé axialement de telle sorte qu'au moins une place de chargement (44, 44') prévue dans le coulisseau rotatif ou transversal (46) atteigne une position fixant une pièce (14, 22) et/ou libérant une pièce (14, 22).

17. Rectifieuse sans centre (32) selon l'une quelconque des revendications 13 à 16, **caractérisée en ce que** le dispositif de chargement/déchargement présente un dispositif de guidage (100), en particulier un poussoir pouvant être abaissé et soulevé.

18. Rectifieuse sans centre (32) selon l'une quelconque des revendications 13 à 16, **caractérisée en ce que** des éléments de protection (60, 70), pouvant être abaissés et soulevés, sont prévus pour une surface d'enveloppe du disque abrasif (28) et/ou du disque de réglage (30), en particulier des tôles de protection en métal ou des protections en plastique.

19. Rectifieuse sans centre (32) selon l'une quelconque des revendications 13 à 17, **caractérisée en ce qu'**au moins deux des éléments disque abrasif (28), disque de réglage (30) et règle d'appui (24) sont déplaçables, à savoir le disque abrasif et le disque de réglage (28, 30) dans la direction radiale (R_{R},R_{R}') et/ou la règle d'appui (24) dans sa direction longitudinale et/ou transversale.

20. Rectifieuse sans centre (32) selon la revendication 13, **caractérisée en ce que** le dispositif de chargement/déchargement présente des éléments de protection pouvant être abaissés et soulevés (60, 70), afin de canaliser le jet de fluide (48').

21. Rectifieuse sans centre (32) selon la revendication 20, comprenant une place de chargement pour la pièce, depuis laquelle la pièce peut être descendue avec un poussoir abaissable (100) à l'encontre de la pression du jet de fluide.
